# EUROPEAN PATENT SPECIFICATION

(11) **EP 2 470 324 B1**
(45) Date of publication and mention of the grant of the patent: **11.07.2018**
(21) Application number: 10812400.9
(22) Date of filing: 20.08.2010
(51) Int. Cl.: B23K 9/127, B23K 9/095

(54) **DEVICE AND METHOD FOR AUTOMATIC MULTIPLE-BEAD WELDING**
VORRICHTUNG UND VERFAHREN ZUR AUTOMATISCHEN MEHRLAGENSCHWEISSUNG
DISPOSITIF ET PROCÉDÉ POUR UN SOUDAGE AUTOMATIQUE À MULTIPLES CORDONS

(30) Priority: 24.08.2009 SE 0950604
(43) Date of publication of application: 04.07.2012
(73) Proprietor: ESAB AB, 402 77 Göteborg (SE)
(72) Inventor: BOHLIN, Gunnar, SE-548 74 Gårdsjö (SE)
(74) Representative: Bjerkéns Patentbyrå KB (Stockholm)
(86) International application number: PCT/SE2010/050900
(87) International publication number: WO 2011/025441

(56) References cited:
- WO-A1-97/23324
- WO-A1-97/23324
- DE-A1-102006 061 712
- US-A1- 2005 023 261

## Description

### TECHNICAL FIELD

The present invention concerns automatic welding. More specifically, the present invention concerns a method and a device for automatic multiple-bead welding as disclosed in the preamble of claims 1 and 11 (see, for example, US 2005/0023261). The automatic multiple-bead welding comprises joint tracking.

### DESCRIPTION OF PRIOR ART

When welding sheets, the sheets are joined by applying melted metal in the joint between the sheets. The melted metal is called weld bead and may originate from the sheets or from material that has been supplied from a welding wire. For a plurality of products it is necessary to use thick sheets. Examples of such products are ships, pipelines and towers for wind power plants. When welding thick sheets it is not possible to obtain a strong weld by only welding one single weld bead. In order to obtain a strong weld joint several weld beads are required which are applied in the joint between the sheets. In order for the weld joint to be strong it is required that the successive weld beads are applied upon each other so that they fill out the whole joint between the sheets. Towers for wind power plants, as mentioned as an example above, are normally welded together from tube sections. The tube sections usually have a length of some meter. When two such tube sections are to be welded together, the tube sections are arranged next to each other in a rotation cradle such that their longitudinal axes essentially coincide. The tube sections can rotate around its longitudinal axis in the rotation cradle. A welding head is arranged at the joint between the tube sections. During welding, the tube sections are rotated around their longitudinal axes while the welding head is held substantially fixed. The tube sections do however not have end surfaces which are completely plane and perpendicular to the longitudinal axis and are also not completely cylinder shaped. This has as a consequence that the welding head must be moved radially and axially in relation to the longitudinal axes of the tube sections in order for the weld beads to be correctly positioned. A plurality of known techniques for controlling a welding head along a joint exists.

In the Swedish patent 515 773 a method is described for joint tracking in which a laser scanner is used for detecting the geometry of the joint. The laser scanner uses laser triangulation in order to detect the edges and the sides of the joint. The electrode feeding speed, the welding speed and the position of the electrode and the number of beads are automatically adjusted such that the end result will be as desired even if there are deviations in the joint geometry or the joint volume. The method requires that the geometry of the joint is determined before each new weld bead. When the weld bead is being filled, it becomes however more and more difficult to determine the edges of the joint.

The American patent US 5,302,799 describes a welding analysing system and a control system which is intended for automatic welding devices. The control system uses an optical stereo guiding system which is described in the American patent US 5,111,126. The stereo guiding system comprises mirrors which ensure that two separate images will reach the camera.

The American patent 5,572,102 describes a method and a device for controlling welding robots and is based on registering a reference image of a weld on a reference workpiece. The reference image is used when welding another workpiece in that the image of the other workpiece is compared with the reference image. The welding is then controlled on the basis of the comparison. With the method corrections in real time of the weld path are avoided.

### SUMMARY OF THE INVENTION

An object of the present invention is to provide a method and a device that enable a robust joint tracking.

A further object of the present invention is to provide a method and a device which enable joint tracking even when the weld joint is being filled.

At least one of said objects is obtained with a device and a method according to the independent claims.

Further advantages of the invention are obtained by the features in the dependent claims.

A basic idea of the present invention is combine joint tracking by means of triangulation with joint tracking based on stereo images.

Triangulation is a faster method and is used with advantage as long as it is possible to detect the joint with that technique.

According to a first aspect of the present invention a welding device is provided for automatic multiple-bead welding of a joint that is formed by two joint surfaces, which joint extends along a joint line and which comprises a first edge on one side of the joint line and a second edge on the other side of the joint line, which edges define the extension of the joint across the joint line. The welding device comprises a welding head for the application of weld beads in the joint, a line illumination member which is arranged to illuminate the joint by scanning a light beam across the joint line, at least one camera arranged for registering line images of the joint when it is illuminated with the scanned light beam, and a processing member for determining at least the location of the edges of the joint by means of triangulation based on the registered line image. The welding device is characterized in that it comprises a stereo image member arranged to register photometric stereo images of the joint substantially simultaneously with the registration of the line images, wherein the welding device is arranged to during welding of a weld joint with a plurality of weld beads control the welding head in dependence on both stereo images and line images.

The determination of the location of the edges of a joint by triangulation is a well known method within welding and will not be described more closely here. However, it is difficult to use triangulation in order to find the edges of a weld joint when the joint is almost filled with weld beads. By registering photometric stereo images it is possible to more accurately determine the edges of the weld joint when the weld joint is almost filled. However, triangulation is a faster method, which means that one wants to use it as long as it is possible. By photometric stereo images is meant images which have different information about the same area. Different information may for example be obtained by taking images of the same area from different angles. In accordance with the invention it is possible to use more than two different images in a stereo image.

The welding head is controlled such that the weld bead will land correctly in the weld joint. In order for it to be possible to achieve this, it is necessary to know the position of the welding head in relation to the camera.

The stereo image member may comprise a first illumination member and a second illumination member, wherein the first illumination member is arranged to illuminate the joint from one side of the joint line and the second illumination member is arranged to illuminate the joint from the other side of the joint line, and wherein the welding device is arranged to with said at least one camera register a first stereo image when the joint is illuminated with the first illumination member and a second image when the joint is illuminated with the second illumination member. The stereo images are put together to a photometric stereo image which is used for determining the locations of the edges of the joint. It is possible to use more than two light sources and/or more than two stereo images. It is for example possible to take one image without any of the illumination members being illuminated.

The first and the second illumination members are with advantage arranged such that they substantially illuminate along one illumination direction each, wherein the angle between the illumination directions for the first and second illumination member is greater than 90°. Such an arrangement of the illumination directions gives a good contrast in a composite image, which has as a consequence that the location of the edges can be determined with a high certainty.
The camera which is arranged to register stereo images may also be arranged for registering line images. By only having one camera, the arrangement of the camera in relation to the welding head is facilitated. Furthermore, the cost for the welding device is lower with only one camera compared with the case that it would have two cameras or more.
The welding device comprises with advantage position determination members for determining the positions for the registration of the stereo images and the line images, wherein the stereo images are stored in the processing member together with the position for their registration. In this manner, it is possible, when determining the location of the edges before the application of a weld bead, to use the images which were registered when the previous weld bead was applied.

The processing member may be arranged to, when registering a stereo image in a position where a stereo image previously has been registered, correlate the registered stereo image with the previously stored stereo image for the position in order to obtain a displacement value which describes how much the joint has been moved across the joint line in relation to the previously stored image. The displacement value can be used for controlling the welding head.
The processing member may be arranged to, when registering a line image in a position, in which a line image has been registered previously, replace the previously stored locations of the edges of the joint by locations which are determined from the registered line image if such a determination is possible and to otherwise add the displacement value to the previously stored locations of the edges of the joint. The use of the displacement value in the mentioned manner is done when a plurality of weld beads already have been applied in the weld joint and the triangulation does no longer give any reliable information of the locations of the edges.

The processing member may be arranged to use information of where the previous weld bead was applied at the correlation of the registered stereo image with the previously stored stereo image. This may give further security when controlling the welding head such that the weld bead lands at the correct location.

The line illumination member may be designed in many different manners, but according to a preferred embodiment it comprises a laser. The laser is with advantage a diode laser. With a laser as light source it is possible to obtain a well defined beam on the weld joint. Diode lasers are relatively inexpensive which makes it possible for the price for the welding device to be low.

Said at least one camera is with advantage provided with an interference filter which is arranged for transmission of the light from the first illumination member and the second illumination member. With an interference filter undesired light is filtered out. This has a consequence that the photometric stereo image becomes more sharp.

According to a second aspect of the invention, a method is provided for controlling multiple-bead welding of a joint formed by two joint surfaces, which joint extends along a joint line and which comprises a first edge on one side of the joint line and a second edge on the other side of the joint line, which edges define the extension of the joint across the joint line. The method comprises the steps to illuminate the joint with a light beam by scanning the light beam across the joint line, to register a line image of the joint at a plurality of positions along the joint line when it is illuminated with the scanned light beam, and to determine at least the location of the edges of the joint by means of triangulation based on the registered line image. The method is characterized in that it also comprises the steps to register photometric stereo images of the joint at said plurality of positions along the joint line substantially simultaneously with the registration of the line images with the scanned light beam, to during welding of a weld joint with a plurality of weld beads control the welding head in dependence on both stereo images and said data for the shape of the joint.
With a method according to the second aspect of the invention, the same advantages as described in connection with the first aspect of the present invention are achieved.

With advantage, the method also may comprise the steps to determine the positions for the registration of the stereo images and the line images, and to store the stereo images and said locations of the edges of the joint in the processing member together with the position for their registration. In this manner it is possible, when determining the location of the edges before the application of a weld bead, to use the images which were registered at the application of the previous weld bead.

When registering a stereo image in a position where a stereo image previously has been registered, the registered stereo image may be correlated with the previously stored stereo image for the position in order to obtain a displacement value which describes how much the joint has been moved across the joint line in relation to the previously stored stereo image. The displacement value may be used for controlling the welding head.
When registering a line image in a position, in which a line image has been registered previously, the previously stored locations of the edges of the joint may be replaced with locations which are determined from the registered line image if such a determination is possible and to otherwise add the displacement value to the previously stored positions. The use of the displacement value in the mentioned manner is done when a plurality of weld beads already have been applied in the weld joint and the triangulation no longer gives any reliable information about the locations of the edges.

Information about where the previous weld bead was applied may be used at the correlation of a registered stereo image with a previously stored stereo image. This may give further security when controlling the welding head such that the weld bead lands on the correct location.

In the following, preferred embodiments of the invention will be described with reference to the annexed drawings.

### SHORT DESCRIPTION OF THE DRAWINGS

- Fig 1: shows schematically a welding device and two tubes when the tubes are being welded together.
- Fig 2: shows in more detail the welding device and the members for registering images.
- Fig 3: is a flow chart which describes the method according to the present invention.

### DESCRIPTION OF PREFERRED EMBODIMENTS

In the following description of preferred embodiments of the invention, corresponding features in the different figures will be designated by the same reference signs.

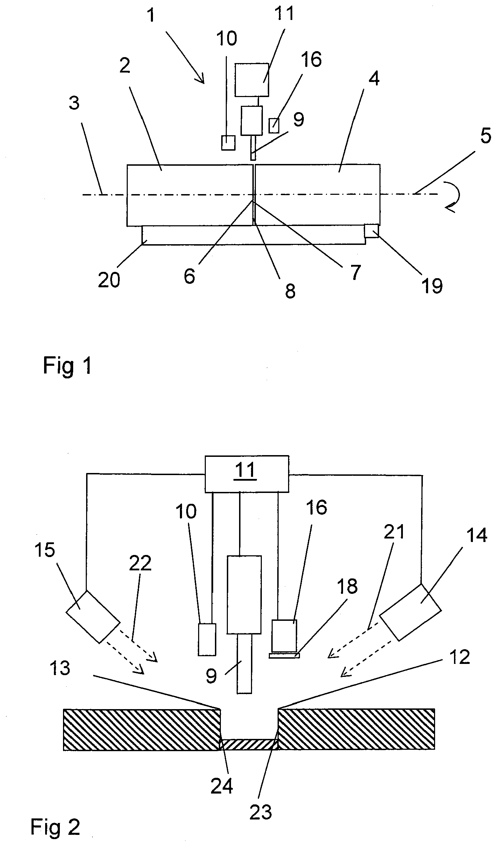

Fig 1 shows schematically a welding device 1 for automatic multiple-bead welding of a joint formed by two joint surfaces 23, 24. Fig 1 shows a first tube 2 with a symmetry axis 3, and a second tube 4 with a symmetry axis 5, wherein the first tube 2 has substantially the same diameter as the second tube 4. The tubes are arranged in a cradle 20, with the first end 6 of the first tube 2 next to the first end 7 of the second tube 4, and with the symmetry axes arranged such that they substantially coincide with each other. The junction between the tubes 2, 4 defines a joint line 8. The tubes 2, 3 can be rotated around their symmetry axes in the cradle 20. The welding device 1 comprises a welding head 9 for the application of weld beads in the joint in order to weld the tubes together, and a line illumination member 10 which is arranged to illuminate the joint by scanning a light beam across the joint line 8. According to an embodiment of the invention, the line illumination member comprises a laser such as for example a diode laser. It is of course possible to use other kinds of lasers and other kinds of light sources. The welding device 1 also comprises a camera 16 arranged for registering an image of the joint when it is illuminated with the scanned light beam. Such an image will in the following be called line image. The welding device also comprises a processing member in the form of a computer 11, for determining the location of the edges of the joint by means of triangulation based on the registered line image. Triangulation is a well known method for determining the locations of the edges in a weld joint and will therefore not be described in detail here.

The welding device 1 also comprises a stereo image member arranged to register photometric stereo images of the joint substantially simultaneously with the registration of the line images. The stereo image member will be described in more detail below in connection with the description of Fig 2. The welding device 1 also comprises a position determination member for determining the positions for the registration of the stereo images and the triangulation image. The position determination member may comprise an angle indicator 19 which is connected to the cradle 20 in order to measure the rotation of the tubes 2, 4. The stereo images are stored in the computer together with the position for their registration which has been registered with the angle indicator 19. The welding device 1 controls the welding head 9 in dependence on both stereo images and said positions of the edges of the joint.

Fig 2 shows in more detail the welding device and the members for registering images. In Fig 2 also the joint is shown in more detail. The joint comprises a first edge 12 on one side of the joint line 8 and second edge 13 on the other side of the joint line 8. The edges 12, 13 define the extension of the joint across the joint line 8. The stereo image member comprises a first illumination member 14 and a second illumination member 15, wherein the first illumination member 14 is arranged to illuminate the joint from one side of the joint line 8 and the second illumination member 15 is arranged to illuminate the joint from the other side of the joint line 8. The welding device 1 is arranged to, with the same camera 16 as used for registering line images, also register a first stereo image when the joint is illuminated with the first illumination member 14 and a second image when the joint is illuminated with the second illumination member 15. The camera is provided with an interference filter 18 which is arranged for transmission of the light from the first illumination member and the second illumination member. The interference filter 18 filters out undesired light which does not originate from the illumination members 14, 15.

The first illumination member 14 illuminates along a first principle illumination direction 21 and the second illumination member 15 illuminates along a second principle illumination direction 22. The angle between the illumination directions for the first illumination member 14 and the second illumination member 15 is greater than 90°.

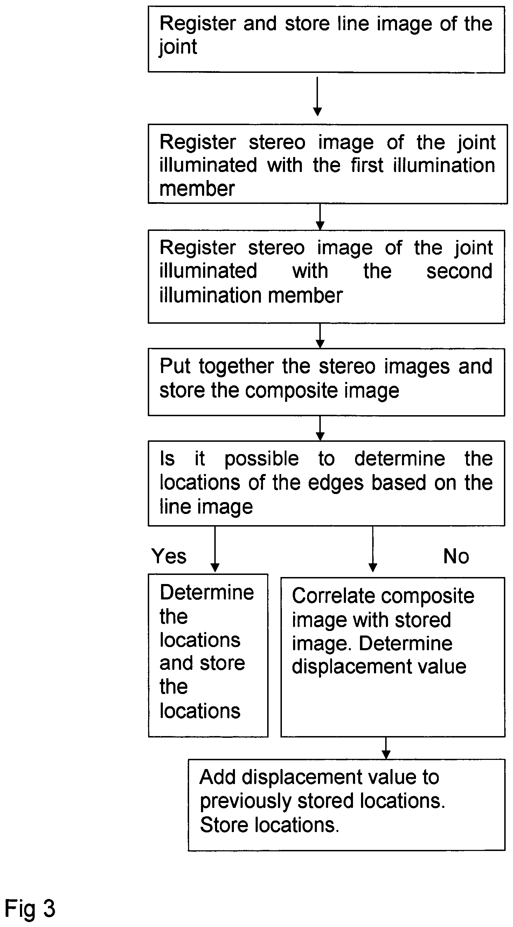

The function of the welding device according to the invention will now be described with reference to Fig 3 which is a flow chart and Fig 1 and Fig 2. In a first step, the joint is illuminated with a light beam in that the laser beam from the line illumination member 10 is scanned across the joint line 8. A line image of the joint is registered at a plurality of positions along the joint line 8 when it is illuminated with the scanned light beam as is clear from the second step in Fig 3. Photometric stereo images of the joint are registered at said plurality of positions along the joint line 8 substantially simultaneously with the registration of the line images with the scanned light beam. The positions for the registration of the stereo images and line images are determined and the stereo images and the locations of the edges of the joint are stored in the processing member together with the positions for their registration.

The location of the edges of the joint is determined if possible by means of triangulation based on the registered line image. When registering a stereo image in a position where a stereo image previously has been registered, the registered stereo image is correlated with the previously stored stereo image for the position in order to obtain a displacement value which describes how much the joint has been moved across the joint line in relation to the previously stored stereo image. If it is not possible to determine the location of the edges of the joint by means of triangulation based on the registered line image, the displacement value is added to the previously stored positions. In the beginning of the welding, when the first weld beads are applied in the joint, it is easy to determine the locations of the edges of the joint by triangulation based on the line images. As the joint is being filled, it becomes more and more difficult to determine the locations of the edges of the joint based on the line images. The stereo images are then used instead. Information of where the previous weld bead was applied is used at the correlation of a registered stereo image with a previously stored image.
The location of the welding head in relation to the camera is known. The welding head is controlled in dependence on the location of the edges. During welding of a weld joint with a plurality of weld beads, the welding head is thus controlled in dependence on both stereo images and said data for the shape of the joint.

The above described embodiments may be varied in many different manners without departing from the scope of the invention which is only limited by the appended claims.
It is of course possible to use more than two images for the registration of the photometric stereo image.
The invention can be applied for joints with a varying width along the joint line, and/or with varying sheet thickness along the joint line.

## Claims

1. Welding device (1) for automatic multiple-bead welding of a joint that is formed by two joint surfaces (23, 24), which joint extends along a joint line (8) and which comprises a first edge (12) on one side of the joint line (8) and a second edge (13) on the other side of the joint line (8), which edges (12, 13) define the extension of the joint across the joint line (8), which welding device (1) comprises a welding head (9) for the application of weld beads in the joint, a line illumination member (10) which is arranged to illuminate the joint by scanning a light beam across the joint line (8), at least one camera (16) arranged for registering line images of the joint when it is illuminated with the scanned light beam, and a processing member (11) for determining at least the location of the edges (12, 13) of the joint by means of triangulation based on the registered line image, **characterized in that** the welding device (1) comprises a stereo image member arranged to register photometric stereo images of the joint substantially simultaneously with the registration of the line images, wherein during welding of a weld joint with a plurality of weld beads, the welding device (1) is arranged to control the welding head (9) in dependence on both the stereo images and the line images.

2. Welding device (1) according to claim 1, wherein the stereo image member comprises a first illumination member (14) and a second illumination member (15), wherein the first illumination member (14) is arranged to illuminate the joint from one side of the joint line (8) and the second illumination member (15) is arranged to illuminate the joint from the other side of the joint line (8), and wherein the welding device (1) is arranged to register a first stereo image with said at least one camera (16) when the joint is illuminated with the first illumination member (14) and register a second stereo image with said at least one camera (16) when the joint is illuminated with the second illumination member (15).

3. Welding device (1) according to claim 2, wherein the first illumination member (14) and the second illumination member (15) each substantially illuminate along one illumination direction (21, 22), wherein the angle between the illumination directions (21, 22) for the first illumination member (14) and the second illumination member (15) is greater than 90°.

4. Welding device (1) according to claim 1 or 2, wherein the at least one camera (16) which is arranged to register the stereo images is also arranged for registering the line images.

5. Welding device (1) according to any of the preceding claims, comprising a position determination member (19) for determining the positions for the registration of the stereo images and the line images, wherein the stereo images are stored in the processing member (11) together with their position for their registration.

6. Welding device (1) according to claim 5, wherein the processing member (11) is arranged to, when registering a stereo image in a position where a stereo image previously has been registered, correlate the registered stereo image with the previously stored stereo image for the position in order to obtain a displacement value which describes how much the joint has been moved across the joint line (8) in relation to the previously stored image.

7. Welding device (1) according to claim 6, wherein the processing member (11) is arranged to, when registering a line image in a position in which a line image has been registered previously, replace the previously stored locations of the edges (12, 13) of the joint by locations which are determined from the registered line image if such a determination is possible and to otherwise add the displacement value to the previously stored locations of the edges (12, 13) of the joint.

8. Welding device (1) according to claim 6 or 7, wherein the processing member (11) is arranged to use information of where the previous weld bead was applied at the correlation of the registered stereo image with the previously stored stereo image.

9. Welding device (1) according to any of the preceding claims, wherein the line illumination member (10) comprises a laser.

10. Welding device (1) according to any of the preceding claims, wherein said at least one camera (16) is provided with an interference filter (18) which is arranged for transmission of the light from the first illumination member (14) and the second illumination member (15).

11. A method for controlling multiple-bead welding of a joint formed by two joint surfaces (23, 24), which joint extends along a joint line (8) and which comprises a first edge (12) on one side of the joint line (8) and a second edge (13) on the other side of the joint line (8), which edges (12, 13) define the extension of the joint across the joint line (8), which method comprises the steps
to illuminate the joint with a light beam by scanning the light beam across the joint line (8),
to register a line image of the joint at a plurality of positions along the joint line when it is illuminated with the scanned light beam, and
to determine at least the location of the edges (12, 13) of the joint by means of triangulation based on the registered line image, **characterized in that** it also comprises the steps
to register photometric stereo images of the joint at said plurality of positions along the joint line (8) substantially simultaneously with the registration of the line images with the scanned light beam,
to control the welding head (9) during welding of a weld joint with a plurality of weld beads in dependence on both the stereo images and said data for the shape of the joint.

12. A method according to claim 11, comprising the steps
to determine the positions for the registration of the stereo images and the line images, and
to store the stereo images and said locations of the edges (12, 13) of the joint in the processing member together with their position for their registration.

13. A method according to claim 12, comprising the steps
to, when registering a stereo image in a position where a stereo image previously has been registered, correlate the registered stereo image with the previously stored stereo image for the position in order to obtain a displacement value which describes how much the joint has been moved across the joint line in relation to the previously stored stereo image.

14. A method according to claim 13, comprising the steps
to, when registering a line image in a position, in which a line image has been registered previously, replace the previously stored locations of the edges (12, 13) of the joint with locations which are determined from the registered line image if such a determination is possible and to otherwise add the displacement value to the previously stored positions.

15. A method according to claim 13 or 14, wherein the information about where the previous weld bead was applied is used at the correlation of a registered stereo image with a previously stored stereo image.

## Patentansprüche

1. Schweißvorrichtung (1) zur automatischen Mehrlagenschweißung einer Verbindung, die durch zwei Verbindungsflächen (23, 24) ausgebildet ist, wobei sich die Verbindung entlang einer Verbindungslinie (8) erstreckt und eine erste Kante (12) auf einer Seite der Verbindungslinie (8) und eine zweite Kante (13) auf der anderen Seite der Verbindungslinie (8) umfasst, wobei die Kanten (12, 13) die Erstreckung der Verbindung über die Verbindungslinie (8) definieren, wobei die Schweißvorrichtung (1) einen Schweißkopf (9) zur Anbringung von Schweißlagen in der Verbindung, ein Linienbeleuchtungselement (10), das dazu angeordnet ist, die Verbindung durch Scannen eines Lichtstrahls über die Verbindungslinie (8) zu beleuchten, zumindest eine Kamera (16), die dazu angeordnet ist, Linienbilder der Verbindung aufzuzeichnen, wenn sie mit dem gescannten Lichtstrahl beleuchtet wird, und ein Verarbeitungselement (11) zum Bestimmen zumindest des Ortes der Kanten (12, 13) der Verbindung mittels Triangulation basierend auf dem aufgezeichneten Linienbild umfasst, **dadurch gekennzeichnet, dass** die Schweißvorrichtung (1) ein Stereobildelement umfasst, das dazu angeordnet ist, photometrische Stereobilder der Verbindung im Wesentlichen gleichzeitig mit der Aufzeichnung der Linienbilder aufzuzeichnen, wobei während des Schweißens einer Schweißverbindung mit einer Mehrzahl von Schweißlagen die Schweißvorrichtung (1) dazu angeordnet ist, den Schweißkopf (9) in Abhängigkeit von sowohl den Stereobildern als auch den Linienbildern zu steuern.

2. Schweißvorrichtung (1) nach Anspruch 1, wobei das Stereobildelement ein erstes Beleuchtungselement (14) und ein zweites Beleuchtungselement (15) umfasst, wobei das erste Beleuchtungselement (14) dazu angeordnet ist, die Verbindung von einer Seite der Verbindungslinie (8) zu beleuchten, und das zweite Beleuchtungselement (15) dazu angeordnet ist, die Verbindung von der anderen Seite der Verbindungslinie (8) zu beleuchten, und wobei die Schweißvorrichtung (1) dazu angeordnet ist, ein erstes Stereobild mit der zumindest einen Kamera (16) aufzuzeichnen, wenn die Verbindung mit dem ersten Beleuchtungselement (14) beleuchtet wird, und ein zweites Stereobild mit der zumindest einen Kamera (16) aufzuzeichnen, wenn die Verbindung mit dem zweiten Beleuchtungselement (15) beleuchtet wird.

3. Schweißvorrichtung (1) nach Anspruch 2, wobei das erste Beleuchtungselement (14) und das zweite Beleuchtungselement (15) jedes im Wesentlichen entlang einer Beleuchtungsrichtung (21, 22) leuchten, wobei der Winkel zwischen den Beleuchtungsrichtungen (21, 22) für das erste Beleuchtungselement (14) und das zweite Beleuchtungselement (15) größer als 90° ist.

4. Schweißvorrichtung (1) nach Anspruch 1 oder 2, wobei die zumindest eine Kamera (16), die dazu angeordnet ist, die Stereobilder aufzuzeichnen, auch dazu angeordnet ist, die Linienbilder aufzuzeichnen.

5. Schweißvorrichtung (1) nach einem der vorangehenden Ansprüche, umfassend ein Positionsbestimmungselement (19) zum Bestimmen der Positionen für die Aufzeichnung der Stereobilder und der Linienbilder, wobei die Stereobilder im Verarbeitungselement (11) zusammen mit ihrer Position für ihre Aufzeichnung gespeichert werden.

6. Schweißvorrichtung (1) nach Anspruch 5, wobei das Verarbeitungselement (11) dazu angeordnet ist, beim Aufzeichnen eines Stereobilds in einer Position, in der zuvor ein Stereobild aufgezeichnet wurde, das aufgezeichnete Stereobild mit dem zuvor für die Position gespeicherten Stereobild zu korrelieren, um einen Verschiebungswert zu erhalten, der beschreibt, wie sehr die Verbindung in Bezug auf das zuvor gespeicherte Bild über die Verbindungslinie (8) bewegt wurde.

7. Schweißvorrichtung (1) nach Anspruch 6, wobei das Verarbeitungselement (11) dazu angeordnet ist, beim Aufzeichnen eines Linienbilds in einer Position, in der zuvor ein Linienbild aufgezeichnet wurde, die zuvor gespeicherten Orte der Kanten (12, 13) der Verbindung durch Orte zu ersetzen, die aus dem aufgezeichneten Linienbild bestimmt werden, wenn eine solche Bestimmung möglich ist, und andernfalls den Verschiebungswert zu den zuvor gespeicherten Orten der Kanten (12, 13) der Verbindung zu addieren.

8. Schweißvorrichtung (1) nach Anspruch 6 oder 7, wobei das Verarbeitungselement (11) dazu angeordnet ist, Informationen darüber, wo die vorherige Schweißlage angebracht wurde, bei der Korrelation des aufgezeichneten Stereobilds mit dem zuvor gespeicherten Stereobild zu nutzen.

9. Schweißvorrichtung (1) nach einem der vorangehenden Ansprüche, wobei das Linienbeleuchtungselement (10) einen Laser umfasst.

10. Schweißvorrichtung (1) nach einem der vorangehenden Ansprüche, wobei die zumindest eine Kamera (16) mit einem Interferenzfilter (18) bereitgestellt ist, der für die Übertragung des Lichts vom ersten Beleuchtungselement (14) und vom zweiten Beleuchtungselement (15) angeordnet ist.

11. Verfahren zum Steuern der Mehrlagenschweißung einer Verbindung, die durch zwei Verbindungsflächen (23, 24) ausgebildet ist, wobei sich die Verbindung entlang einer Verbindungslinie (8) erstreckt und eine erste Kante (12) auf einer Seite der Verbindungslinie (8) und eine zweite Kante (13) auf der anderen Seite der Verbindungslinie (8) umfasst, wobei die Kanten (12, 13) die Erstreckung der Verbindung über die Verbindungslinie (8) definieren, wobei das Verfahren die folgenden Schritte umfasst:
Beleuchten der Verbindung mit einem Lichtstrahl durch Scannen des Lichtstrahls über die Verbindungslinie (8),
Aufzeichnen eines Linienbilds der Verbindung an einer Mehrzahl von Positionen entlang der Verbindungslinie, wenn diese mit dem gescannten Lichtstrahl beleuchtet wird, und
Bestimmen zumindest des Ortes der Kanten (12, 13) der Verbindung mittels Triangulation basierend auf dem aufgezeichneten Linienbild, **dadurch gekennzeichnet,**
**dass** es außerdem die folgenden Schritte umfasst:
Aufzeichnen eines photometrischen Stereobilds der Verbindung an der Mehrzahl von Positionen entlang der Verbindungslinie (8) im Wesentlichen gleichzeitig mit der Aufzeichnung der Linienbilder mit dem gescannten Lichtstrahl,
Steuern des Schweißkopfs (9) während des Schweißens einer Schweißverbindung mit einer Mehrzahl von Schweißlagen in Abhängigkeit von sowohl den Stereobildern als auch den Daten für die Form der Verbindung.

12. Verfahren nach Anspruch 11, umfassend die folgenden Schritte:
Bestimmen der Positionen für die Aufzeichnung der Stereobilder und der Linienbilder und
Speichern der Stereobilder und der Orte der Kanten (12, 13) der Verbindung im Verarbeitungselement zusammen mit ihrer Position für ihre Aufzeichnung.

13. Verfahren nach Anspruch 12, umfassend die folgenden Schritte:
beim Aufzeichnen eines Stereobild in einer Position, in der zuvor ein Stereobild aufgezeichnet wurde, Korrelieren des aufgezeichneten Stereobilds mit dem zuvor gespeicherten Stereobild für die Position, um einen Verschiebungswert zu erhalten, der beschreibt, wie sehr die Verbindung in Bezug auf das zuvor gespeicherte Stereobild über die Verbindungslinie bewegt wurde.

14. Verfahren nach Anspruch 13, umfassend die folgenden Schritte:
beim Aufzeichnen eines Linienbilds in einer Position, in der zuvor ein Linienbild aufgezeichnet wurde, Ersetzen der zuvor gespeicherten Orte der Kanten (12, 13) der Verbindung durch Orte, die aus dem aufgezeichneten Linienbild bestimmt werden, wenn eine solche Bestimmung möglich ist, und andernfalls Addieren des Verschiebungswerts zu den zuvor gespeicherten Positionen.

15. Verfahren nach Anspruch 13 oder 14, wobei die Informationen darüber, wo die vorherige Schweißlage angebracht wurde, bei der Korrelation eines aufgezeichneten Stereobilds mit einem zuvor gespeicherten Stereobild genutzt werden.

## Revendications

1. Dispositif de soudage (1) pour un soudage automatique à multiples cordons d'un joint qui est formé par deux surfaces de joint (23, 24), lequel joint s'étend le long d'une ligne de joint (8) et comprend un premier bord (12) sur un côté de la ligne de joint (8) et un second bord (13) de l'autre côté de la ligne de joint (8), lesquels bords (12, 13) définissent l'extension du joint à travers la ligne de joint (8), lequel dispositif de soudage (1) comprend une tête de soudage (9) pour l'application de cordons de soudure dans le joint, un élément d'éclairage de ligne (10) qui est conçu pour éclairer le joint en balayant un faisceau lumineux à travers la ligne de joint (8), au moins un dispositif de prise de vue (16) conçu pour enregistrer des images de ligne du joint lorsqu'il est éclairé par le faisceau lumineux balayé, et un élément de traitement (11) pour déterminer au moins l'emplacement des bords (12, 13) du joint par l'intermédiaire d'une triangulation basée sur l'image de ligne enregistrée, **caractérisé en ce que** le dispositif de soudage (1) comprend un élément d'images stéréo conçu pour enregistrer des images stéréo photométriques du joint sensiblement simultanément avec l'enregistrement des images de ligne, dans lequel, pendant le soudage d'un joint de soudure avec une pluralité de cordons de soudure, le dispositif de soudage (1) est conçu pour commander la tête de soudage (9) en fonction à la fois des images stéréo et des images de ligne.

2. Dispositif de soudage (1) selon la revendication 1, dans lequel l'élément d'images stéréo comprend un premier élément d'éclairage (14) et un second élément d'éclairage (15), dans lequel le premier élément d'éclairage (14) est conçu pour éclairer le joint à partir d'un côté de la ligne de joint (8) et le second élément d'éclairage (15) est conçu pour éclairer le joint à partir de l'autre côté de la ligne de joint (8), et dans lequel le dispositif de soudage (1) est conçu pour enregistrer une première image stéréo à l'aide dudit au moins un dispositif de prise de vue (16) lorsque le joint est éclairé à l'aide du premier élément d'éclairage (14) et pour enregistrer une seconde image stéréo à l'aide dudit au moins un dispositif de prise de vue (16) lorsque le joint est éclairé à l'aide du second élément d'éclairage (15).

3. Dispositif de soudage (1) selon la revendication 2, dans lequel le premier élément d'éclairage (14) et le second élément d'éclairage (15) éclairent chacun sensiblement le long d'une direction d'éclairage (21, 22), l'angle entre les directions d'éclairage (21, 22) pour le premier élément d'éclairage (14) et le second élément d'éclairage (15) étant supérieur à 90 °.

4. Dispositif de soudage (1) selon la revendication 1 ou 2, dans lequel le au moins un dispositif de prise de vue (16) qui est conçu pour enregistrer les images stéréo est également conçu pour enregistrer les images de ligne.

5. Dispositif de soudage (1) selon l'une quelconque des revendications précédentes, comprenant un élément de détermination de positions (19) pour déterminer les positions de l'enregistrement des images stéréo et des images de ligne, dans lequel les images stéréo sont stockées dans l'élément de traitement (11) ensemble avec leur position pour leur enregistrement.

6. Dispositif de soudage (1) selon la revendication 5, dans lequel l'élément de traitement (11) est conçu pour, lors de l'enregistrement d'une image stéréo dans une position où une image stéréo a précédemment été enregistrée, corréler l'image stéréo enregistrée avec l'image stéréo précédemment stockée pour la position afin d'obtenir une valeur de déplacement qui décrit dans quelle mesure le joint a été déplacé à travers la ligne de joint (8) en référence à l'image précédemment stockée.

7. Dispositif de soudage (1) selon la revendication 6, dans lequel l'élément de traitement (11) est conçu pour, lors de l'enregistrement d'une image de ligne dans une position dans laquelle une image de ligne a été enregistrée précédemment, remplacer les emplacements précédemment stockés des bords (12, 13) du joint par des emplacements qui sont déterminés à partir de l'image de ligne enregistrée si une telle détermination est possible et pour ajouter sinon la valeur de déplacement aux emplacements précédemment stockés des bords (12, 13) du joint.

8. Dispositif de soudage (1) selon la revendication 6 ou 7, dans lequel l'élément de traitement (11) est conçu pour utiliser des informations de l'endroit où le cordon de soudure précédent a été appliqué lors de la corrélation de l'image stéréo enregistrée avec l'image stéréo précédemment stockée.

9. Dispositif de soudage (1) selon l'une quelconque des revendications précédentes, dans lequel l'élément d'éclairage de ligne (10) comprend un laser.

10. Dispositif de soudage (1) selon l'une quelconque des revendications précédentes, dans lequel ledit au moins un dispositif de prise de vue (16) est muni d'un filtre antiparasite (18) qui est conçu pour une transmission de la lumière depuis le premier élément d'éclairage (14) et le second élément d'éclairage (15).

11. Procédé de commande d'un soudage à multiples cordons d'un joint formé par deux surfaces de joint (23, 24), lequel joint s'étend le long d'une ligne de joint (8) et comprend un premier bord (12) sur un côté de la ligne de joint (8) et un second bord (13) sur l'autre côté de la ligne de joint (8), lesquels bords (12, 13) définissent l'extension du joint à travers la ligne de joint (8), lequel procédé comprend les étapes consistant à
éclairer le joint à l'aide d'un faisceau lumineux en balayant le faisceau lumineux à travers la ligne de joint (8),
enregistrer une image de ligne du joint à une pluralité de positions le long de la ligne de joint lorsqu'elle est éclairée par le faisceau lumineux balayé, et
déterminer au moins l'emplacement des bords (12, 13) du joint par l'intermédiaire d'une triangulation basée sur l'image de ligne enregistrée, **caractérisé en ce qu'**il comprend également les étapes consistant à
enregistrer des images stéréo photométriques du joint au niveau de ladite pluralité de positions le long de la ligne de joint (8) sensiblement simultanément avec l'enregistrement des images de ligne à l'aide du faisceau de lumière balayé,
commander la tête de soudage (9) pendant le soudage d'un joint de soudure à l'aide d'une pluralité de cordons de soudure en fonction à la fois des images stéréo et desdites données sur la forme du joint.

12. Procédé selon la revendication 11, comprenant les étapes consistant à
déterminer les positions pour l'enregistrement des images stéréo et des images de ligne, et
stocker les images stéréo et lesdits emplacements des bords (12, 13) du joint dans l'élément de traitement ensemble avec leur position pour leur enregistrement.

13. Procédé selon la revendication 12, comprenant les étapes consistant à
lors de l'enregistrement d'une image stéréo dans une position où une image stéréo a précédemment été enregistrée, corréler l'image stéréo enregistrée avec l'image stéréo précédemment stockée pour la position afin d'obtenir une valeur de déplacement qui décrit dans quelle mesure le joint a été déplacé à travers la ligne de joint en référence à l'image stéréo précédemment stockée.

14. Procédé selon la revendication 13, comprenant les étapes consistant à
lors de l'enregistrement d'une image de ligne dans une position dans laquelle une image de ligne a été enregistrée précédemment, remplacer les emplacements précédemment stockés des bords (12, 13) du joint par des emplacements qui sont déterminés à partir de l'image de ligne enregistrée si une telle détermination est possible et ajouter sinon la valeur de déplacement aux positions précédemment stockées.

15. Procédé selon la revendication 13 ou 14, dans lequel les informations concernant l'endroit où le cordon de soudure précédent a été appliqué sont utilisées lors de la corrélation d'une image stéréo enregistrée avec une image stéréo précédemment stockée.
